# FASCICULE DE BREVET EUROPEEN

(11) **EP 1 996 377 B1**
(45) Date de publication et mention de la délivrance du brevet: **18.11.2009**
(21) Numéro de dépôt: 07731568.7
(22) Date de dépôt: 02.02.2007
(51) Int. Cl.: B25J 15/00, B25J 17/02, B21J 15/10

(54) **PROCEDE DE POSITIONNEMENT D'UN OUTIL D'ASSEMBLAGE A L'EXTREMITE D'UN BRAS ARTICULE ET DISPOSITIF POUR SA MISE EN OEUVRE**
VERFAHREN ZUR POSITIONIERUNG EINES MONTAGEWERKZEUGES AM ENDE EINES GELENKARMS UND VORRICHTUNG ZUR UMSETZUNG DIESES VERFAHRENS
METHOD FOR POSITIONING AN ASSEMBLY TOOL AT THE END OF AN ARTICULATED ARM AND DEVICE FOR IMPLEMENTING THE SAME

(30) Priorité: 07.02.2006 FR 0650428
(43) Date de publication de la demande: 03.12.2008
(73) Titulaire: Alema Automation, 33700 Merignac (FR)
(72) Inventeur: PRAT, Philippe, F-33610 Cestas (FR); MALVAUT, Jean, F-33850 Leognan (FR); VILLEGOUREIX, Franck, F-33600 Pessac (FR)
(74) Mandataire: Fantin, Laurent
(86) Numéro de dépôt international: PCT/FR2007/050741
(87) Numéro de publication internationale: WO 2007/090981

(56) Documents cités:
- EP-A- 0 448 777
- US-A1- 2005 172 481

## Description

La présente invention se rapporte à un procédé de positionnement d'un outil d'assemblage tel que par exemple un outil de perçage ou de rivetage disposé à l'extrémité d'un bras articulé, permettant notamment d'éviter le glissement de l'outil, et éventuellement de corriger l'angle d'incidence de l'outil de manière à le positionner selon la normale à la surface à usiner. L'invention concern plus particulièrement un procédé selon le préambule de la revendication 1, un effecteur selon le préamblule de la revendication 3, ainisi qu'un dispositif pour la mise en oeuvre dudit procédé.

Un tel procédé et un tel effecteur sont connus du document US-A-2005 172 481

Dans le domaine de l'aéronautique auquel l'invention est plus particulièrement destinée, de nombreuses pièces du fuselage et de la voilure d'un aéronef sont assemblées par rivetage. Cet assemblage peut prévoir les étapes consistant à, positionner les pièces à assembler l'une par rapport à l'autre, percer les deux pièces, contrôler éventuellement les perçages, déposer un mastic d'étanchéité, mettre en place un élément de jonction tel qu'un rivet et enfin contrôler l'assemblage obtenu. Ces différentes étapes sont répétées pour tous les trous qui sont placés selon une cartographie donnée.

Pour que les éléments soient correctement assemblés, il convient que la cartographie des trous soit respectée et que de préférence, les trous et/ou les rivets soient disposés selon la normale à la surface.

Pour réaliser cet assemblage, une première solution consiste à utiliser une machine spéciale avec des déplacements cartésiens. Ce type de machine comprend un portique avec deux longerons le long desquels peut se translater une traverse le long de laquelle peut se translater un bras télescopique à l'extrémité duquel est susceptible d'être disposé un outil. Les longerons, la traverse et le bras télescopique matérialisent les trois axes de translations, les mouvements de rotation étant susceptibles d'être prévus au niveau de l'extrémité du bras.

Ce type de machine a pour avantage d'avoir une structure rigide ce qui permet d'appliquer des efforts relativement importants par l'intermédiaire de l'outil, notamment lors de l'étape de perçage, tout en évitant le glissement de l'outil afin de respecter la cartographie des trous.

Toutefois, ce type de machine a pour principal inconvénient d'être fixe. Ainsi, il est nécessaire de déplacer les éléments à assembler sous cette structure ce qui peut constituer un risque d'endommagement pour lesdits éléments. Par ailleurs, cette machine ne peut accepter que des éléments à assembler ne dépassant pas un certain gabarit fonction des dimensions de la structure. Par conséquent, ce type de machine est normalement réservé à des pièces de faible encombrement.

En effet, même s'il est possible d'imaginer une structure de grandes dimensions, cette dernière en raison de ces dimensions aurait des dispersions dimensionnelles telles qu'elles ne permettraient pas de respecter la cartographie des trous. De plus, une telle structure aurait un coût prohibitif.

Pour pallier à ces inconvénients, l'opération d'assemblage peut être réalisée en utilisant un bras articulé comportant à son extrémité libre un porte-outil appelé par la suite effecteur, comme le montre le document US-A-2005 172 481. Les bras articulés peuvent aisément se déplacer autour d'une structure d'aéronef en cours d'assemblage ce qui permet d'assembler des éléments de grandes dimensions et d'éviter de les déplacer, contrairement aux machines à déplacements cartésiens. Selon un autre avantage, les bras articulés sont des produits commercialisés en grand nombre, si bien que cette solution a un coût inférieur aux machines spéciales à déplacements cartésiens.

De manière connue, un bras articulé comprend généralement une base pivotante sur laquelle est rapporté un premier segment susceptible de pivoter selon un premier axe de rotation horizontal, un deuxième segment étant articulé selon un deuxième axe de rotation horizontal par rapport à l'extrémité libre du premier segment. L'extrémité libre du second segment comprend généralement une troisième articulation, voire une quatrième articulation selon deux axes de rotation sensiblement perpendiculaires.

Ces différentes articulations permettent de déplacer l'effecteur dans un espace à trois dimensions X, Y, Z et de l'orienter selon trois axes de rotation Rx, Ry, Rz.

L'effecteur comprend généralement un châssis rigide avec à l'avant une surface susceptible d'être plaquée contre l'élément à usiner ou à assembler et à l'arrière des moyens d'accouplement à l'extrémité libre du bras articulé, ledit châssis supportant un outil ou un barillet intégrant plusieurs outils ainsi que des moyens pour saisir, déplacer et faire fonctionner le ou lesdits outils et éventuellement d'autres accessoires.

Lors du perçage ou de l'assemblage, l'effort exercé par l'outil est transmis à l'effecteur par le bras articulé. Des moyens de mesure de cet effort sont généralement prévus au niveau de l'accouplement entre l'effecteur et le bras.

Le principal inconvénient de cette solution réside dans le fait que l'effort susceptible d'être transmis par le bras articulé est limité. En effet, même si l'effecteur est rigide, les articulations du bras articulé ont tendance à se déformer si l'effort dépasse un certain seuil si bien que l'outil tend à glisser au niveau de la surface et la cartographie des trous peut ne plus être respectée. De la même manière, si l'effort dépasse un certain seuil, l'outil tend à ne plus être orienté selon la normale à la surface ce qui peut nuire à la qualité du trou ou de l'assemblage.

Aussi, la présente demande vise à pallier aux inconvénients de l'art antérieur en proposant un procédé de positionnement d'un outil d'assemblage tel que par exemple un outil de perçage ou de rivetage, disposé à l'extrémité d'un bras articulé, permettant de limiter les risques de glissement de l'outil même si le bras articulé exerce un effort important.

A cet effet, l'invention a pour objet un procédé de positionnement par rapport à une surface d'un effecteur comportant au moins un outil prévu pour effectuer une étape d'assemblage telle que par exemple un perçage ou un rivetage, ledit effecteur étant rapporté à l'extrémité d'un bras articulé susceptible d'appliquer par l'intermédiaire dudit effecteur un effort à l'encontre de ladite surface, ledit effecteur comportant une paroi frontale en regard de ladite surface, **caractérisé en ce qu**'il consiste à mesurer un mouvement relatif entre ladite paroi frontale et une plaque d'appui comportant au moins une partie susceptible de prendre appui directement ou indirectement contre ladite surface et d'être immobile par rapport à ladite surface, ladite plaque d'appui étant reliée à ladite paroi frontale de manière à pouvoir se déplacer selon au moins une direction parallèle a ladite paroi frontale, et à commander ledit bras articulé afin qu'il effectue un mouvement visant à compenser le mouvement relatif mesuré.

L'invention a également pour objet un effecteur selon la ravendication 3 et un dispositif selon la revendication 10 pour la mise en oeuvre du procédé.

D'autres caractéristiques et avantages ressortiront de la description qui va suivre de l'invention, description donnée à titre d'exemple uniquement, en regard des dessins annexés sur lesquels :
- la figure 1 est un schéma illustrant un bras articulé à l'extrémité duquel est rapporté un effecteur,
- les figures 2A et 2B sont des schémas de l'effecteur illustrant la compensation du glissement de l'outil,
- les figures 3A à 3C sont des schémas du nez de l'effecteur illustrant la correction de l'orientation de l'outil,

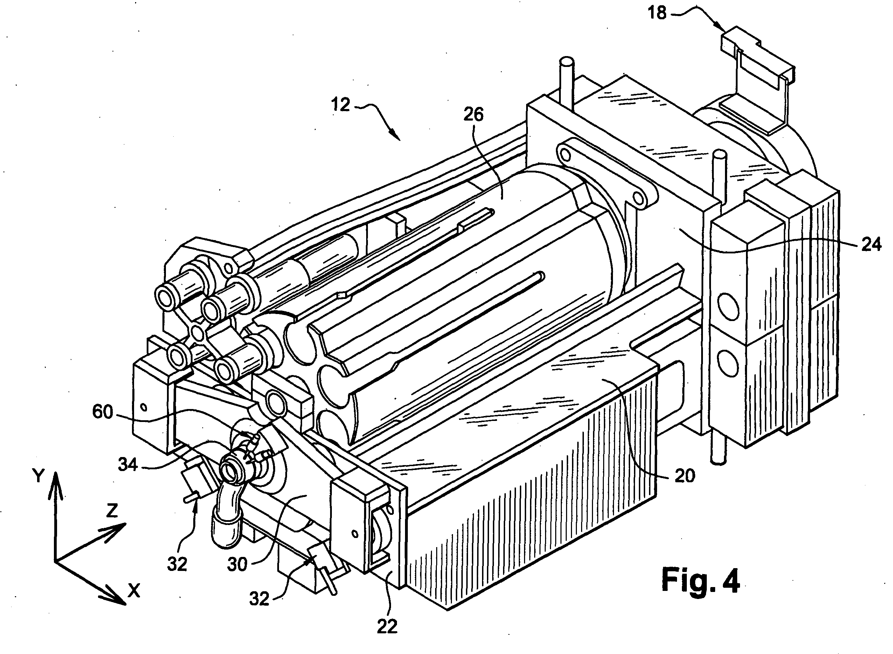

- la figure 4 est une vue en perspective d'un effecteur selon un mode de réalisation préféré de l'invention,
- la figure 5 est une vue en perspective de l'avant de l'effecteur,
- la figure 6 est une vue de face de l'avant de l'effecteur,
- la figure 7 est une vue latérale de l'avant de l'effecteur,
- la figure 8A est une vue latérale illustrant en détail le nez de l'effecteur lorsque l'outil est orienté selon la normale à une surface, et
- la figure 8B est une vue latérale illustrant en détail le nez de l'effecteur lorsque l'outil n'est pas orienté selon la normale à une surface.

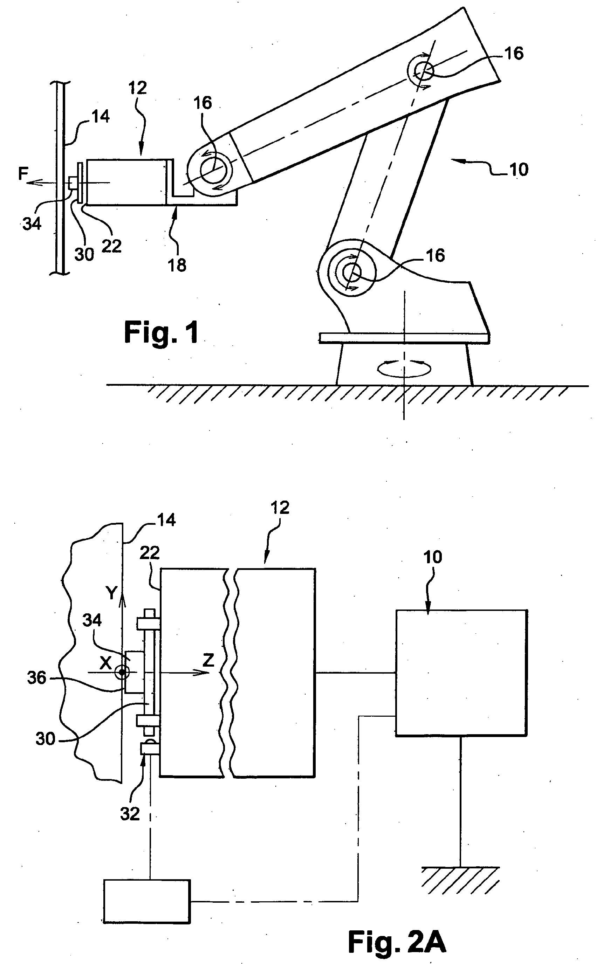

Sur la figure 1, on a représenté en 10 un bras articulé supportant à son extrémité libre un effecteur 12 susceptible de réaliser au moins une étape d'assemblage d'éléments tels que par exemple les parties constituant le fuselage ou la voilure d'un aéronef.

Pour la suite de la description, on entend par une étape d'assemblage une ou plusieurs étapes de l'assemblage consistant à, positionner les pièces à assembler l'une par rapport à l'autre, percer les deux pièces, contrôler éventuellement les perçages, déposer un mastic d'étanchéité, mettre en place un élément de jonction tel qu'un rivet ou à contrôler l'assemblage obtenu, cette liste n'étant pas exhaustive.

Lors de certaines étapes d'assemblage, notamment lors du perçage, le bras articulé 10 est susceptible d'appliquer via l'effecteur 12 un effort F sur une surface 14 d'un élément.

Pour la suite de la description, la normale à cette surface 14 correspond à l'axe Z d'un repère orthonormé, les axes X et Y étant tangents à ladite surface.

Le bras articulé comprend au moins une articulation 16 et de préférence plusieurs articulations 16, permettant de déplacer l'effecteur 12 dans un espace à trois dimensions X, Y, Z et de l'orienter selon trois rotations Rx, Ry et Rz.

Le bras articulé 10 comprend à son extrémité libre des moyens 18 d'accouplement à l'effecteur 12 permettant de rendre démontable cette liaison, lesdits moyens comportant de préférence des moyens pour mesurer l'effort F.

Le bras articulé 10 ainsi que ses moyens de pilotage ne sont pas plus détaillés car ils sont connus de l'homme de l'art.

Selon un mode de réalisation, l'effecteur 12 comprend un châssis 20 avec à l'avant une paroi frontale 22, à l'arrière une paroi 24 assurant la liaison avec le bras articulé 10, un berceau étant prévu entre la paroi frontale et la paroi arrière pour supporter au moins un outil et de préférence un barillet 26 incorporant plusieurs outils.

L'effecteur comprend également différents moyens pour déplacer l'outil, par rapport à l'effecteur 12 et pour le mettre en mouvement.

Par ailleurs, différents instruments peuvent être rapportés sur cet effecteur, tels que des outils de contrôle, une caméra ou autres.

L'effecteur ainsi que ses différents instruments et équipements ne sont pas plus détaillés car ils sont connus de l'homme du métier.

La paroi frontale 22 comprend un conduit ou orifice 28 via lequel est susceptible de passer un outil pour atteindre la surface 14. L'outil est positionné par rapport à ce conduit 28.

La liaison entre l'outil et l'effecteur 12 n'engendrant pas de déformations susceptibles de nuire au positionnement de l'outil, ce dernier est parfaitement positionné par rapport à l'effecteur. Par conséquent, pour la suite de la description le positionnement de l'effecteur correspond au positionnement de l'outil.

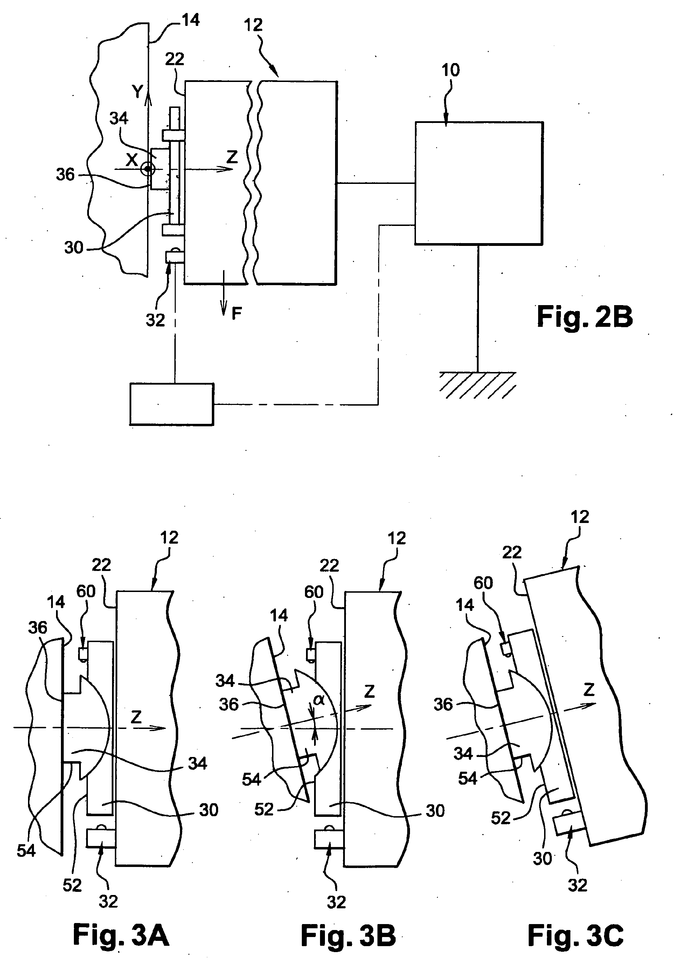

Selon l'invention, l'effecteur comprend une plaque frontale d'appui 30 susceptible de se déplacer parallèlement à la paroi frontale 22 et comportant au moins une partie susceptible de prendre appui directement ou indirectement contre la surface 14 et d'être immobile par rapport à ladite surface. Ainsi, comme illustré sur les figures 2A et 2B, le reste de l'effecteur peut se déplacer parallèlement à ladite plaque d'appui 30 immobile par rapport à la surface 14.

En complément, l'effecteur comprend des moyens 32 pour mesurer les mouvements relatifs entre le reste de l'effecteur 12 et la plaque d'appui 30.

Le procédé de positionnement selon l'invention consiste à mesurer un mouvement relatif entre la plaque d'appui 30 et le reste de l'effecteur 12, à renseigner les moyens de pilotage dudit mouvement relatif afin que lesdits moyens de pilotage commandent la ou les articulations du bras articulé afin de compenser ledit mouvement relatif entre la paque d'appui 30 et le reste de l'effecteur.

Ainsi, il est possible d'appliquer des efforts importants à l'encontre de la surface 14. Contrairement aux dispositifs de l'art antérieur, le glissement n'intervient plus entre ladite surface 14 et l'effecteur 12, mais entre la plaque d'appui 30 et l'effecteur 12. Les moyens 32 permettent de mesurer ces mouvements relatifs entre la plaque d'appui et l'effecteur afin de compenser ledit mouvement relatif grâce à des mouvements opposés du bras articulé.

Selon un mode de réalisation, un nez 34 de forme sensiblement cylindrique est rapporté de manière rigide sur la plaque d'appui, son extrémité libre 36 prenant appui contre la surface 14. L'extrémité libre 36 se présente sous la forme d'une surface d'appui sensiblement parallèle à la plaque d'appui 30.

Ainsi, l'extrémité 36 du nez 34 est susceptible de prendre appui contre la surface 14 et d'être immobile, comme la plaque d'appui 30, par rapport à ladite surface 14.

Le nez 34 présente un conduit 38 susceptible d'être dans le prolongement du conduit 28 de manière à permettre le passage d'un outil.

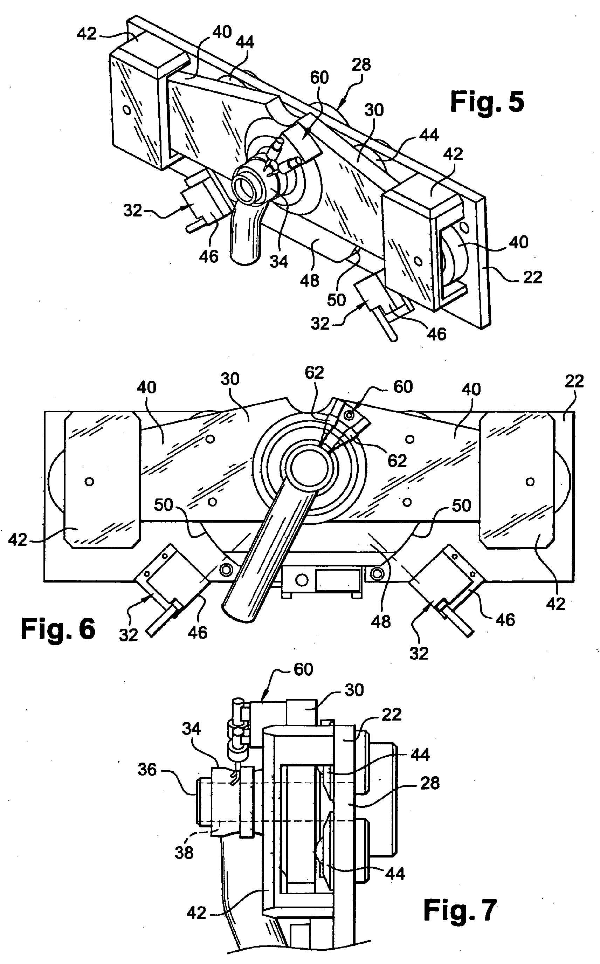

Selon un mode de réalisation préféré, illustré sur les figures 5, 6 et 7, la paroi frontale 22 a une forme rectangulaire, la surface d'appui ayant de part et d'autre deux prolongements 40 susceptibles d'être maintenus par deux brides 42 solidaires de la paroi frontale 22. Selon ce montage, la plaque d'appui 30 peut se déplacer dans un plan parallèle à la paroi frontale 22 mais ne peut pas se translater dans la direction perpendiculaire à ladite paroi frontale 22. D'autres solutions techniques pourraient être envisagées pour obtenir ce type de liaison.

De préférence, des moyens 44 sont prévus pour favoriser ce mouvement et limiter les frottements entre la paroi frontale 22 et la plaque d'appui 30. Cette configuration permet de concentrer au niveau de la liaison entre la plaque d'appui 30 et la paroi frontale 22, les éventuelles déformations de la chaîne cinématique qui va du socle du bras articulé jusqu'au point de contact entre l'outil et la surface 14.

Selon un mode de réalisation, des butées à bille sont prévues au niveau de la paroi frontale contre lesquelles la plaque d'appui 30 est susceptible de prendre appui.

Selon une variante simplifiée, la plaque d'appui 30 peut se translater par rapport à la paroi frontale 22 selon une seule direction privilégiée, par exemple l'axe Y.

Selon une variante plus élaborée, comme illustré sur les différentes figures, la plaque d'appui 30 peut se déplacer par rapport à la paroi frontale 22 selon différentes directions coplanaires au plan XY.

Avantageusement, la compensation est réalisée si le mouvement entre la plaque d'appui 30 et la paroi frontale 22 dépasse un certain seuil de l'ordre de 0,2 mm afin de limiter les temps de calcul.

Selon un mode de réalisation, les moyens 32 permettant de mesurer les mouvements relatifs entre la plaque d'appui 30 et la paroi frontale 22 comprennent au moins un capteur 46 de type optique solidaire de la paroi frontale 22.

Si la plaque d'appui 30 peut se translater uniquement selon une translation, un seul capteur 46 est nécessaire.

Si la plaque d'appui 30 peut se déplacer selon plusieurs directions coplanaires au plan XY, on peut prévoir deux capteurs 46 dont les faisceaux sont orientés selon deux directions différentes, comme illustré sur la figure 6.

De préférence, les faisceaux des capteurs 46 forment un angle de l'ordre de 90°.

En complément, la plaque d'appui 30 peut comprendre un élément rapporté 48 offrant une ou des surfaces de réflexion 50 orientées de manière sensiblement perpendiculaire aux faisceaux des capteurs 46. Cette configuration permet d'obtenir une meilleure précision de la mesure du déplacement relatif entre la plaque d'appui 30 et la paroi frontale 22.

Toutefois, il est possible de prévoir d'autres techniques pour mesurer ce déplacement relatif.

Le procédé de positionnement de l'invention permettant d'éviter le glissement de l'outil est maintenant décrit au regard des figures 2A et 2B.

L'outil est positionné par rapport à la surface 14 grâce au bras articulé et occupe une position donnée, comme illustré sur la figure 2A.

Lorsqu'on cherche à réaliser une étape d'assemblage, on applique le nez 34 de la plaque d'appui 30 contre la surface 14 en exerçant un effort F. Lorsque cet effort dépasse un certain seuil, les articulations du bras articulé tendent à engendrer un mouvement de l'effecteur par rapport à la surface 14. Contrairement aux dispositifs de l'art antérieur, la partie de l'outil en contact avec la surface ne glisse pas. Les déformations des articulations provoquent un mouvement relatif de la paroi frontale 22 de l'effecteur par rapport à la plaque d'appui 30, matérialisé par la flèche T sur la figure 2B. Ce mouvement relatif est détecté et mesuré par le ou les capteurs 46. En fonction de cette mesure, les moyens de pilotage du bras articulé commandent un mouvement dudit bras visant à compenser le mouvement relatif afin que l'effecteur revienne dans la position donnée, comme illustré sur la figure 2A.

Selon une autre caractéristique de l'invention, l'effecteur 12 comprend des moyens pour corriger l'incidence de l'outil afin que cette dernière soit sensiblement confondue avec la normale à la surface 14.

A cet effet, la plaque d'appui 30 comprend deux parties, une première partie 52 solidaire de la plaque d'appui 30 et une seconde partie 54 susceptible de prendre appui contre la surface 14, un mouvement de pivotement relatif selon au moins un axe de pivotement étant possible entre la première partie 52 et la seconde partie 54.

Selon un mode de réalisation préféré, un mouvement de pivotement relatif selon au moins deux axes de rotation Rx et Ry est possible entre à les parties 52 et 54 de la plaque d'appui.

Selon un mode de réalisation préféré, le nez est réalisé en deux parties 52 et 54 du nez reliées par l'intermédiaire d'une liaison rotule qui ne permet aucun mouvement de translation, mais uniquement des mouvements de rotation entre lesdites parties 52 et 54. Ainsi, la seconde partie 54 comprend une extrémité 56 avec une surface de contact sensiblement sphérique, et la première partie 52 comprend un siège 58 avec également une surface sensiblement sphérique.

Des moyens 60 pour mesurer l'angle de pivotement relatif entre la première partie 52 du nez et la seconde partie 54 du nez sont prévus. En fonction de cette mesure, les moyens de pilotage du bras articulé commandent la ou les articulations dudit bras articulé afin de corriger ledit pivotement relatif entre les parties 52 et 54 du nez pour que l'outil soit disposé selon la normale à la surface 14.

Avantageusement, la correction est réalisée si le pivotement relatif entre les parties 52 et 54 de la plaque d'appui 30 dépasse un certain seuil de l'ordre de 10 min. d'arc afin de limiter les temps de calcul.

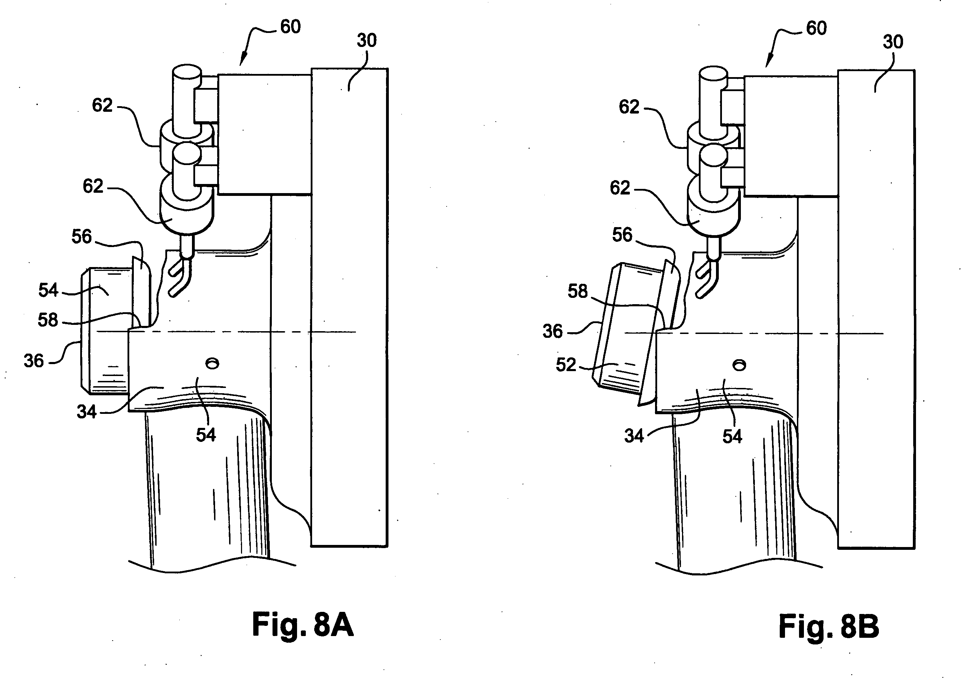

Selon un mode de réalisation préféré et illustré sur les figures 8A et 8B, les moyens 60 de mesure comprennent au moins un capteur 62 susceptible de mesurer l'angle du pivotement relatif dans un plan, solidaire de la première partie 52. Avantageusement, les moyens 60 comprennent deux capteurs 62 susceptibles de mesurer l'angle de pivotement relatif dans deux plans distincts afin de déterminer les mouvements de pivotement selon les axes de rotations Rx et Ry.

Selon un mode de réalisation, les capteurs 62 sont de type inductif. Toutefois, d'autres technologies pourraient être envisagées.

Le procédé de correction de l'incidence de l'outil est maintenant décrit au regard des figures 3A à 3C.

Comme indiqué sur la figure 3A, l'effecteur est orienté de manière à ce que l'outil soit orienté selon la normale à la surface 14.

Lorsque l'effecteur change d'orientation, en raison notamment des distorsions au niveau des articulations du bras articulé, l'axe de l'outil forme un angle a avec la normale à la surface, comme illustré sur la figure 3B. La seconde partie 54 du nez en contact avec la surface 14 ne change pas d'orientation, contrairement à la première partie 52 du nez qui est solidaire de l'effecteur. Par conséquent, un pivotement relatif apparaît entre les parties 52 et 54 du nez. Ce pivotement relatif est détecté et mesuré par le ou les capteurs 62. En fonction de cette mesure, les moyens de pilotage du bras articulé commandent un mouvement dudit bras visant à compenser le pivotement relatif afin que l'outil soit orienté de nouveau selon la normale à la surface 14, comme illustré sur la figure 3C.

Pour faciliter la lecture des dessins, l'angle de pivotement a été exagéré. A titre indicatif, l'angle de pivotement est de l'ordre de quelques degrés dans la réalité.

Bien entendu, l'invention n'est évidemment pas limitée au mode de réalisation représenté et décrit ci-dessus, mais en couvre au contraire toutes les variantes, notamment en ce qui concerne les formes et les dimensions du bras articulé ainsi que l'équipement de l'effecteur.

## Revendications

1. Procédé de positionnement par rapport à une surface (14) d'un effecteur (12) comportant au moins un outil prévu pour effectuer une étape d'assemblage telle que par exemple un perçage ou un rivetage, ledit effecteur (12) étant rapporté à l'extrémité d'un bras articulé (10) susceptible d'appliquer par l'intermédiaire dudit effecteur (12) un effort à l'encontre de ladite surface (14), ledit effecteur (12) comportant une paroi frontale (22) en regard de ladite surface (14), **caractérisé en ce qu'**il comprend les étapes consistant à :
- mesurer un mouvement relatif entre ladite paroi frontale (22) et une plaque d'appui (30) comportant au moins une partie susceptible de prendre appui directement ou indirectement contre ladite surface (14) et d'être immobile par rapport à ladite surface, ladite plaque d'appui (30) étant reliée à ladite prnoi frontale (22) de manière à pouvoir se déplacer selon au moins une direction parallèle à ladite paroi frontale, et
- à commander ledit bras articulé (10) afin qu'il effectue un mouvement visant à compenser le mouvement relatif mesuré.

2. Procédé de positionnement par rapport à une surface (14) d'un effecteur (12) selon la revendication 1, **caractérisé en ce qu'**il consiste à mesurer l'angle de pivotement entre une première partie (52) solidaire de la plaque d'appui et une seconde partie (54) susceptible d'être plaquée et immobile par rapport à ladite surface (14), la liaison entre lesdites parties (52, 54) autorisant un mouvement relatif selon au moins un axe de pivotement, et à commander ledit bras articulé afin qu'il effectue un mouvement visant à corriger l'angle de pivotement mesuré.

3. Effecteur susceptible de permettre la mise en oeuvre du procédé de positionnement par rapport à une surface (14) selon l'une quelconque des revendications précédentes, ledit effecteur étant susceptible d'être rapporté à l'extrémité d'un bras articulé (10) et comportant un châssis (20) avec à l'avant une paroi frontale (22), à l'arrière une paroi (24) assurant la liaison avec le bras articulé (10), un berceau étant prévu entre ladite paroi frontale et ladite paroi arrière pour supporter au moins un outil et de préférence un barillet (26) incorporant plusieurs outils, **caractérisé en ce qu'**il comprend une plaque d'appui (30) susceptible de se déplacer selon au moins une direction parallèle à ladite paroi frontale (22) et comportant au moins une partie susceptible de prendre appui directement ou indirectement contre ladite surface (14) et d'être immobile par rapport à ladite surface, ainsi que des moyens (32) pour mesurer les mouvements relatifs entre le reste de l'effecteur (12) et ladite plaque d'appui (30).

4. Effecteur selon la revendication 3, **caractérisé en ce qu'**un nez (34) de forme sensiblement cylindrique est rapporté de manière rigide sur la plaque d'appui, son extrémité libre (36) prenant appui contre ladite surface (14).

5. Effecteur selon la revendication 3 ou 4, **caractérisé en ce que** ladite surface d'appui (30) comprend de part et d'autre deux prolongements (40) susceptibles d'être maintenus par deux brides (42) solidaires de ladite paroi frontale (22) de manière à ce que ladite plaque d'appui (30) ne puisse se déplacer que dans un plan parallèle à ladite paroi frontale (22) mais pas dans la direction perpendiculaire à ladite paroi frontale (22).

6. Effecteur selon la revendication 3, 4 ou 5, **caractérisé en ce que** lesdits moyens (32) pour mesurer les mouvements relatifs comprennent deux capteurs (46) permettant de mesurer le mouvement relatif selon deux directions différentes.

7. Effecteur selon la revendication 6, **caractérisé en ce que** ladite plaque d'appui (30) comprend des surfaces de réflexion (50) des faisceaux émis par les capteurs sensiblement perpendiculaires auxdits faisceaux.

8. Effecteur selon l'une quelconque des revendications 3 à 7, **caractérisé en ce que** ladite plaque d'appui (30) comprend deux parties, une première partie (52) solidaire de ladite plaque d'appui (30) et une seconde partie (54) susceptible de prendre appui contre ladite surface (14), au moins un mouvement de pivotement relatif selon au moins un axe de pivotement étant possible entre ladite première partie (52) et ladite seconde partie (54) et **en ce que** l'effecteur comprend des moyens (60) pour mesurer l'angle de pivotement relatif entre lesdites parties (52, 54).

9. Effecteur selon la revendication 8, **caractérisé en ce que** lesdit moyens (60) pour mesurer l'angle de pivotement relatif comprennent deux capteurs (62) solidaires de ladite première partie (52) susceptibles de mesurer l'angle de pivotement relatif selon deux plans distincts.

10. Dispositif pour la mise en oeuvre du procédé selon la revendication 1 ou 2, comportant un bras articulé (10), des moyens de pilotage dudit bras, ainsi qu'un effecteur selon l'une quelconque des revendications 3 à 9.

## Claims

1. Process for positioning an effector (12) relative to a surface (14) comprising at least one tool that is provided to carry out an assembly stage such as, for example, drilling or riveting, said effector (12) being attached to the end of an articulated arm (10) that can apply via said effector (12) a force against said surface (14), said effector (12) comprising a front wall (22) opposite said surface (14), **characterized in that** it comprises stages that consist in :
- measuring a relative movement between said front wall (22) and a support plate (30) comprising at least one part that can be supported directly or indirectly against said surface (14) and that can be stationary relative to said surface, said support plate (30) being connected to said front wall (22) so as to be able to be moved in at least one direction parallel to said front wall, and
- actuating said articulated arm (10) so that it performs a movement designed to compensate for the relative measured movement.

2. Process for positioning an effector (12) relative to a surface (14) according to claim 1, wherein it consists in measuring the pivoting angle between a first part (52) that is integral with the support plate and a second part (54) that can be flattened and stationary relative to said surface (14), the connection between said parts (52, 54) allowing relative movement in at least one pivoting axis, and in actuating said articulated arm so that it performs a movement designed to correct the measured pivoting angle.

3. Effector that can allow implementation of the positioning process relative to a surface (14) according to any one of the preceding claims, said effector being able to be attached to the end of an articulated arm (10) and comprising a frame (20) with, to the front, a front wall (22), to the rear, a wall (24) that ensures the connection to the articulated arm (10), a cradle being provided between said front wall and said rear wall to support at least one tool and preferably a drum (26) incorporating several tools, wherein it comprises a support plate (30) that can be moved according at least one direction parallel to said front wall (22) and that comprises at least one part that can be directly or indirectly supported against said surface (14) and that can be stationary relative to said surface, as well as means (32) for measuring the relative movements between the remainder of the effector (12) and said support plate (30).

4. Effector according to claim 3, wherein a nose (34) of essentially cylindrical shape is rigidly attached to the support plate, its free end (36) being supported against said surface (14).

5. Effector according to claim 3 or 4, wherein said support surface (30) comprises on either side two extensions (40) that can be held by two clamps (42) that are integral with said front wall (22) such that said support plate (30) can only be moved in a plane that is parallel to said front wall (22), but not in the direction that is perpendicular to said front wall (22).

6. Effector according to claim 3, 4, or 5, wherein said means (32) for measuring the relative movements comprise two sensors (46) that make it possible to measure the relative movement in two different directions.

7. Effector according to claim 6, wherein said support plate (30) comprises reflection surfaces (50) of the beams emitted by the sensors, which surfaces are essentially perpendicular to said beams.

8. Effector according to any of claims 3 to 7, wherein said support plate (30) comprises two parts, a first part (52) that is integral with said support plate (30) and a second part (54) that can be supported against said surface (14), at least one relative pivoting movement along at least one pivoting axis being possible between said first part (52) and said second part (54) and wherein the effector comprises means (60) for measuring the relative pivoting angle between said parts (52, 54).

9. Effector according to claim 8, wherein said means (60) for measuring the relative pivoting angle comprise two sensors (62) that are integral with said first part (52) and that can measure the relative pivoting angle along two distinct planes.

10. Device for implementing the process according to clam 1 or 2, comprising an articulated arm (10), control means of said arm, as well as an effector according to any one of claims 3 to 9.

## Patentansprüche

1. Verfahren zum Positionieren eines Arbeitsorgans (12) gegenüber einer Fläche (14), welches Arbeitsorgan wenigstens ein Werkzeug umfasst, das vorgesehen ist, um einen Montageschritt, wie zum Beispiel ein Bohren oder Nieten durchzuführen, wobei das Arbeitsorgan (12) an das Ende eines Gelenkarms (10) angesetzt ist, der geeignet ist, mittels des Arbeitsorgans (12) eine Kraft gegen die Fläche (14) aufzubringen, wobei das Arbeitsorgan (12) eine stirnseitige Wand (22) gegenüber der Fläche (14) aufweist, **dadurch gekennzeichnet, dass** es die Schritte umfasst, die darin bestehen:
- eine Relativbewegung zwischen der stirnseitigen Wand (22) und einer Anlageplatte (30) zu messen, die wenigstens einen Teil aufweist, der geeignet ist, sich direkt oder indirekt an der Fläche (14) abzustützen und gegenüber der Fläche unbeweglich zu sein, wobei die Anlageplatte (30) mit der stirnseitigen Wand (22) derart verbunden ist, dass sie sich entlang wenigstens einer zu der stirnseitigen Wand parallelen Richtung bewegen kann,und
- den Gelenkarm (10) zu steuern, damit er eine Bewegung ausführt, deren Ziel es ist, die gemessene Relativbewegung zu kompensieren.

2. Verfahren zum Positionieren eines Arbeitsorgans (12) gegenüber einer Fläche (14) nach Anspruch 1, **dadurch gekennzeichnet, dass** es darin besteht, den Schwenkwinkel zwischen einem mit der Anlageplatte fest verbundenen ersten Teil (52) und einem zweiten Teil (54), das geeignet ist, an die Fläche (14) angedrückt zu werden und gegenüber dieser unbeweglich zu sein, zu messen, wobei die Verbindung zwischen den Teilen (52, 54) eine Relativbewegung entlang wenigstens einer Schwenkachse zulässt, und den Gelenkarm zu steuern, damit er eine Bewegung ausführt, deren Ziel es ist, den gemessenen Schwenkwinkel zu korrigieren.

3. Arbeitsorgan, das geeignet ist, die Durchführung des Verfahrens zum Positionieren gegenüber einer Fläche (14) nach einem der vorhergehenden Ansprüche zu ermöglichen, wobei das Arbeitsorgan geeignet ist, an das Ende eines Gelenkarms (10) angesetzt zu werden und ein Gestell (20) mit - am vorderen Teil - einer stirnseitigen Wand (22) umfasst, wobei am hinteren Teil eine Wand (24) die Verbindung mit dem Gelenkarm (10) sicherstellt, wobei zwischen der stirnseitigen Wand und der hinteren Wand ein Träger vorgesehen ist, um wenigstens ein Werkzeug und vorzugsweise eine mehrere Werkzeuge enthaltende Trommel (26) zu tragen, **dadurch gekennzeichnet, dass** es eine Anlageplatte (30) umfasst, die geeignet ist, sich entlang wenigstens einer zur stirnseitigen Wand (22) parallelen Richtung zu bewegen und die wenigstens einen Teil umfasst, der geeignet ist, sich direkt oder indirekt an der Fläche (14) abzustützen und gegenüber der Fläche unbeweglich zu sein, sowie Mittel (32), um die Relativbewegungen zwischen dem Rest des Arbeitsorgans (12) und der Anlageplatte (30) zu messen.

4. Arbeitsorgan nach Anspruch 3, **dadurch gekennzeichnet, dass** eine im wesentlichen zylinderförmige Nase (34) an die Anlageplatte starr angesetzt ist, wobei ihr freies Ende (36) sich an der Fläche (14) abstützt.

5. Arbeitsorgan nach Anspruch 3 oder 4, **dadurch gekenntzeichnet, dass** die Anlagefläche (30), auf der einen und der anderen Seite, zwei Verlängerungen (40) aufweist, die geeignet sind, durch zwei mit der stirnseitigen Wand (22) fest verbundene Flansche (42) gehalten zu werden, so dass die Anlageplatte (30) sich lediglich in einer zur stirnseitigen Wand (22) parallelen Ebene, nicht aber in der zur stirnseitigen Wand (22) senkrechten Richtung bewegen kann.

6. Arbeitsorgan nach Anspruch 3, 4 oder 5, **dadurch gekennzeichnet, dass** die Mittel (32) zum Messen der Relativbewegungen zwei Messfühler (46) umfassen, die ermöglichen, die Relativbewegung in zwei unterschiedlichen Richtungen zu messen.

7. Arbeitsorgan nach Anspruch 6, **dadurch gekennzeichnet, dass** die Anlageplatte (30) Flächen (50) zum Reflektieren der durch die Messfühler ausgesandten Strahlen aufweist, die zu den Strahlen im Wesentlichen senkrecht verlaufen.

8. Arbeitsorgan nach einem der Ansprüche 3 bis 7, **dadurch gekennzeichnet, dass** die Anlageplatte (30) zwei Teile umfasst, ein erstes Teil (52), das mit der Anlageplatte (30) fest verbunden ist, und ein zweites Teil (54), das geeignet ist, sich an der Fläche (14) abzustützen, wobei zwischen dem ersten Teil (52) und dem zweiten Teil (54) wenigstens eine Relativschwenkbewegung entlang wenigstens einer Schwenkachse möglich ist, und dass das Arbeitsorgan Mittel (60) umfasst, um den Relativschwenkwinkel zwischen den Teilen (52, 54) zu messen.

9. Arbeitsorgan nach Anspruch 8, **dadurch gekennzeichnet, dass** die Mittel (60) zum Messen des Relativschwenkwinkels zwei Messfühler (62) umfassen, die mit dem ersten Teil (52) fest verbunden und geeignet sind, den Relativschwenkwinkel entlang zweier unterschiedlicher Ebenen zu messen.

10. Vorrichtung für die Durchführung des Verfahrens nach Anspruch 1 oder 2, umfassend einen Gelenkarm (10), Mittel zur Steuerung des Arms sowie ein Arbeitsorgan nach einem der Ansprüche 3 bis 9.
